# EUROPÄISCHE PATENTSCHRIFT

(11) **EP 2 868 180 B1**
(45) Veröffentlichungstag und Bekanntmachung des Hinweises auf die Patenterteilung: **09.05.2018**
(21) Anmeldenummer: 14168957.0
(22) Anmeldetag: 20.05.2014
(51) Int. Cl.: A01B 73/04

(54) **Landwirtschaftliche Maschine mit mehreren gegeneinander verschwenkbaren Maschinenabschnitten**
Agricultural machine with machine sections which can be pivoted relative to one another
Machine agricole dotée de plusieurs sections de machine pivotantes l'une par rapport à l'autre

(30) Priorität: 23.05.2013 DE 102013105254
(43) Veröffentlichungstag der Anmeldung: 06.05.2015
(73) Patentinhaber: Horsch Maschinen GmbH, 92421 Schwandorf (DE)
(72) Erfinder: Sauerbeck, Richard, 92421 Schwandorf (DE)
(74) Vertreter: Benninger, Johannes

(56) Entgegenhaltungen:
- DE-A1- 2 654 643
- DE-T2- 69 117 842
- US-A- 4 479 549
- US-A- 4 867 245
- US-B1- 6 684 962

## Beschreibung

Die vorliegende Erfindung betrifft eine landwirtschaftliche Maschine zur Bodenbearbeitung und/oder zum Ausbringen von Saatgut, die quer zu einer Fahrtrichtung in wenigstens drei Maschinenabschnitte unterteilt ist, wobei an den Längsseiten eines Mittelteils jeweils Seitenteile angelenkt sind, die gegenüber dem Mittelteil um horizontale Längsachsen verschwenkbar sind.

In der Landwirtschaft gibt es eine Vielzahl verschiedener Bodenbearbeitungsgeräte. Eine häufig verwendete Bauart solcher Geräte, die üblicherweise mittels Zugmaschine über den Acker gezogen werden, umfasst einen angehängten Rahmen mit eigenem Fahrwerk und großer Arbeitsbreite. Solche Bodenbearbeitungsgeräte können bspw. mit Lockerungs- und/oder Schneidwerkzeugen, bspw. als sog. Kurzscheiben- oder Zinkeneggen o. dergl. ausgebildet sein. Derartige Kombinationen können zudem mit Säkombinationen und/oder Düngeverteileinrichtungen ausgestattet sein. Eine in der Praxis gebräuchlich gewordene Bauart kombiniert z.B. Scheibeneggen mit nachfolgenden Packerwerkzeugen.

Um die Transportbreite solcher Maschinen zu reduzieren, können bspw. Teile des Rahmens um horizontale Längsachsen verschwenkt werden, so dass die Baubreite der Maschine auf ein für die Straßenfahrt zulässiges Maß reduziert werden kann.

Bekannt sind landwirtschaftliche Gerätekombinationen mit Bodenbearbeitungs- und Säwerkzeugen, die aus mehreren Sektionen bestehen, bspw. aus drei Sektionen, deren seitliche Sektionen bspw. um horizontale Schwenkachsen seitlich nach oben geschwenkt werden können. Darüber hinaus sind aber auch Gerätekombinationen bekannt, die aus mehr als drei Sektionen, bspw. aus fünf einzelnen Sektionen bestehen. An jeder dieser sog. Sektionen können verschiedene Bodenbearbeitungs- sowie Packerwerkzeuge angebracht sein.

Die Packerwerkzeuge bilden eine sog. Packerwalze, die sich über die gesamte Arbeitsbreite der Maschine erstreckt, jedoch durch die Sektionen in Querrichtung unterteilt ist. Die Packerwerkzeuge können hier auf unterschiedliche Art und Weise ausgeführt sein. So sind Packerwalzen bekannt, bei denen die Packerwerkzeuge als Reifen ausgebildet sind; bekannt sind diese Bauarten als sog. Reifenpacker. Häufig sind die Packerwalzen so ausgeführt, dass zumindest Teile der Packerwalze gleichzeitig als Fahrwerk für die Straßenfahrt verwendet werden können. Daneben gibt es jedoch noch zahlreiche andere Bauarten von Packerelementen.

Die Anzahl der zueinander verschwenkbaren Sektionen ist in der Regel abhängig von der Bauart und der Arbeitsbreite der Maschine. So sind Maschinen kleinerer Arbeitsbreite bekannt, die aus zwei Sektionen bestehen. Bei Maschinen größerer Arbeitsbreite erhöht sich jedoch in der Regel auch die Anzahl der Sektionen, so dass bei Maschinen größerer Arbeitsbreite durchaus drei oder auch fünf Sektionen möglich sind. Diese Sektionen können bspw. in ein Mittelteil sowie je eine linke und rechte Sektion oder in ein Mittelteil und je zwei linke und zwei rechte Sektionen aufgeteilt sein. In ihrer Arbeitsposition sind die Packerwalzen und die Bodenbearbeitungswerkzeuge der einzelnen Sektionen jeweils nahezu linear, d.h. mit ihren Drehachsen fluchtend zueinander angeordnet, um eine optimale Bearbeitungsqualität der Maschine zu gewährleisten. Diese Linearität ist jedoch nicht zwingend erforderlich. Ggf. kann auch eine Beweglichkeit im Betrieb erhalten werden, um bspw. bei welligem Untergrund eine optimale Anpassung an die Bodenoberfläche zu ermöglichen. Die einzelnen Sektionen sind selbstverständlich nicht beweglich, sondern die mehreren Sektionen zueinander.

Bei vielen bekannten landwirtschaftlichen Gerätekombinationen sind die jeweiligen Packerwerkzeuge schwenkbar über horizontale Schwenkachsen mit den jeweiligen Sektionen verbunden. Diese Schwenkbewegungen werden in der Regel mit hydraulisch arbeitenden Zylindern durchgeführt. Es wären darüber hinaus aber auch elektrische, pneumatische oder mechanische Aktuatoren oder Kinematiken vorstellbar. Aufgabe aller Aktuatoren ist es, die Packerwalzensegmente in die jeweils erforderliche Betriebsposition zu bewegen.

So stützt sich bspw. in der Betriebsposition der Arbeitsstellung die Gerätekombination auf der Packerwalze ab bzw. wird hier die Arbeitstiefe der Gerätekombination mit entsprechendem Verschwenken der Packerwalze eingestellt. Weiter kann durch entsprechendes Verschwenken die Gerätekombination ausgehoben werden. Ebenso kann die Packerwalze für die Transportposition in eine hierfür erforderliche Position gebracht werden. Um die Maschine in eine Transportstellung überführen zu können, werden die einzelnen Sektionen zusammengeklappt, wobei die äußeren linken und die rechten Sektionen jeweils mit einer Schwenkbewegung um 180 Grad zusammengeklappt werden, wonach die inneren linken und die inneren rechten Sektionen zusammen mit den bereits um 180 Grad geklappten äußeren Abschnitten nochmals um 90 Grad nach oben geschwenkt werden. D.h. an der mittleren Sektion sind die folgenden Sektionen angelenkt und in Transportstellung um 90 Grad nach oben geschwenkt, während an diesen geschwenkten Sektionen die äußeren Sektionen angelenkt sind, die um 180 Grad zu den mittleren Sektionen verschwenkt sind. In zusammengeklappter Position bzw. in Transportstellung sind bspw. vier einzelne Sektionen und die jeweiligen Packerwalzen und Arbeitswerkzeuge jeweils nebeneinander angeordnet.

Bei dieser Schwenksystematik und Anordnung der einzelnen Bodenbearbeitungs- und Packerwerkzeuge besteht das Problem, dass aufgrund der möglichen Schwenkpositionen der Packerwalzensegmente Kollisionen der Arbeitswerkzeuge bzw. der Packerwerkzeuge auftreten können. Darüber hinaus müssen die Packerwalzensegmente jedoch auch so verschwenkt werden können, dass die maximal zulässige gesetzlich vorgeschriebene Transportbreite von derzeit z.B. drei Metern (für Deutschland) eingehalten werden kann.

Um diesen Problemen entgegenzuwirken, wurden bislang verschiedene Lösungsansätze verfolgt. Maschinen mit nur zwei oder drei Sektionen sind in der Regel so konzipiert, dass die Transportstellung der Packerwalzen dadurch erreicht wird, dass die Zylinder, mit denen die Packerwalzen verschwenkt werden, in deren Endanschlag fahren. Diese Lösung kann jedoch bei Maschinen mit vier oder fünf Sektionen nicht angewendet werden, da bei diesen Gerätekombinationen die Packerwalzen in der Regel in eine Zwischenstellung des Zylinders gebracht werden müssen. Eine derartige Anordnung der Zylinder, auch bei Maschinen mit vier oder fünf Sektionen, würde hier den Schwenkweg der Packerwerkzeuge einschränken, was sich zum einen beim Ausheben der Maschine negativ auf die Bodenfreiheit auswirken würde und zum anderen die Bearbeitungstiefe reduzieren würde.

Es wird also nach einer Lösung gesucht, bei der der Verschwenkweg der Packerwalzen einerseits möglichst groß ist, und bei der auf einfache Weise eine Möglichkeit geschaffen wird, die Packerwalzen für die Transportposition auf einfache Weise in eine dafür erforderliche Position bzw. Zwischenstellung des Zylinders zu bringen.

Eine Möglichkeit, den Hubzylinder der Packerwalze auf eine bestimmte Position zu bewegen, wäre bspw. der Einsatz eines Positionsmesssystems. Ein derartiges Positionsmesssystem für einen Hydraulikzylinder ist durch die DE 10 2006 010 780 A1 bekannt geworden. Darüber hinaus gibt es jedoch noch eine Vielzahl anderer Positionsmesssysteme für Hydraulikzylinder. Allen gemeinsam ist, dass mit Ihnen die jeweils aktuelle Position des Zylinders erfasst wird. Die durch das Messsystem erfassten Werte können bspw. in einer Steuereinheit verarbeitet werden. Somit kann die Bewegung des Zylinders beeinflusst werden. So wäre es denkbar, dass der Zylinder so konzipiert ist, dass dieser die Packerwalze mit dem Beginnen des Klappvorganges automatisch in die vorher eingestellte Position verschwenkt wird. Sobald der Zylinder diese Position erreicht hat, kann er in der entsprechenden Position stehen bleiben.

Zylinder mit Positionsmesssystemen weisen jedoch mehrere Nachteile auf. So sind diese Zylinder in der Regel sehr staub- und schmutzempfindlich und dadurch in der Landwirtschaft nur begrenzet einsetzbar. Weiter sind diese Zylinder in deren Anschaffung sehr teuer. Ebenso benötigen Zylinder mit Positionsmesssystem in der Regel eine Steuerungseinheit, dies wirkt sich auch wieder negativ auf den Preis aus.

Durch die EP 0 916 244 A1 ist ein Bodenbearbeitungsgerät bekannt, bei dem die Stellung der jeweiligen Zylinder mittels Potentiometer erfasst wird. Diese weisen jedoch den Nachteil auf, dass die Justage der gewünschten Positionen sehr zeitintensiv ist. Auch sind diese Potentiometer staub- und schmutzempfindlich und dadurch in der Landwirtschaft nur begrenzt einsetzbar.

Denkbar wäre darüber hinaus noch die Abfrage der Position der Packerwalze mit Hilfe von induktiven Endschaltern. Aber auch bei dieser Methode ist zur Verarbeitung der Signale ein zusätzliches Magnetventil oder eine Steuereinheit erforderlich. Dies wirkt sich ebenfalls negativ auf die Kosten aus.

Eine weitere Möglichkeit wäre es noch, in die Hydraulikzylinder Anschlagstücke einzulegen. Solche Anschlagstücke können bspw. als sog. "Tiefenstop" bezeichnet werden. Diese Anschlagstücke bringen jedoch den Nachteil mit sich, das der jeweilige Bediener der Gerätekombination diese manuell einlegen muss, was sich negativ auf die Bedienerfreundlichkeit der Maschine auswirkt, ebenso können diese Anschlagstücke vergessen werden, wodurch es wiederum zu Kollisionen und damit unter Umständen zu Beschädigungen bei den beweglichen Maschinenteilen kommen kann.

Die 92 13 091 U1 offenbart eine Kreiselegge mit einem mittigen Tragrahmen, an dem seitliche, um im Wesentlichen in Fahrtrichtung verlaufende horizontale Achsen schwenkbare vordere Tragbalken gelagert sind, an welchen mittels Viergelenkeinrichtungen höhenveränderbar ein Getriebegehäuse eines Kreiseleggenteiles gelagert ist. Die Viergelenkeinrichtungen können jeweils Parallelogrammlenker umfassen, welche an ihren den Tragbalken zugewandten Endbereichen zwischen Verstärkungsplatten geführt sein können.

Die US 4 479 549 A offenbart eine landwirtschaftliche Maschine zur Bodenbearbeitung. Die Maschine umfasst drei Maschinenabschnitte, wobei die äußeren Maschinenabschnitte jeweils zum Mittelteil um circa 180° verschwenkbar sind. Nach Verschwenken der äußeren Maschinenabschnitte können sich diese auf Anschläge in Form von Bolzen am Mittelteil abstützen.

Die US 4 867 245 A beschreibt eine landwirtschaftliche Maschine mit fünf Maschinenabschnitten. Hierbei sind die äußeren Maschinenabschnitte jeweils um circa 180 Grad und in die inneren Maschinenabschnitte jeweils um circa 90° verschwenkbar gelagert. Die äußeren Maschinenabschnitte werden in ihrer verschwenkten Endposition jeweils mittels eines Rastanordnung an den inneren Maschinenabschnitten fixiert.

Verschiedene Ausführungsformen faltbarer landwirtschaftlicher Arbeitsgeräte sind zudem in der EP 1 179 289 B1 sowie in der WO 2006/034961 A1 offenbart.

Der vorliegenden Erfindung liegt die Aufgabe zu Grunde, bei einer landwirtschaftlichen Maschine, die aus Sektionen besteht, denen jeweils verschwenkbare Bodenbearbeitungs- oder Packerwalzen nach- oder zugeordnet sind, eine Möglichkeit zu schaffen, mit der das Verschwenken der Packerwalzen beim Zusammenklappen der Maschine in die Transportstellung in einer Weise begrenzt werden kann, dass einerseits eine Kollision der Packerwalzen verhindert und andererseits eine definierte maximale Transportbreite eingehalten werden können.

Diese Aufgabe wird durch eine Maschine mit den Merkmalen des unabhängigen Anspruchs gelöst. Weitere vorteilhafte Ausgestaltungen werden durch die Unteransprüche beschrieben.

Die vorliegende Erfindung liefert eine landwirtschaftliche Maschine zur Bodenbearbeitung und/oder zum Ausbringen von Saatgut, die quer zu einer Fahrtrichtung in fünf Maschinenabschnitte unterteilt ist. An der Längsseite eines Mittelteils sind jeweils Seitenteile angelenkt und schwenkbar befestigt, die gegenüber dem Mittelteil um horizontale Längsachsen in vertikaler Richtung verschwenkbar sind, wobei jedem der Maschinenabschnitte Bodenbearbeitungswerkzeuge und/oder Packerwalzen zugeordnet sind. Die Bodenbearbeitungswerkzeuge und/oder Packerwalzen sind ebenso schwenkbar an den Maschinenabschnitten angelenkt. Mit dieser Anordnung wird eine landwirtschaftliche Maschine zur Bodenbearbeitung zur Verfügung gestellt, die eine sehr große Baubreite aufweisen kann, wie sie für die Feldfahrt zur effektiven Bodenbearbeitung großer Schläge benötigt wird. Andererseits ermöglichen die am Mittelteil angelenkten Seitenteile die Reduzierung der Baubreite, wenn dies z.B. für Straßenfahrten erforderlich ist.

Um die Verschwenkungsvoränge zur Reduzierung der Maschinenbreite möglichst effektiv und einfach bedienbar zu gestalten, sind den Maschinenabschnitten erfindungsgemäß jeweils Anschläge zugeordnet, die so angebracht sind, dass diese erst nach dem Verschwenken der Maschinenabschnitte wirksam werden, wobei durch diese Anschläge die verschwenkbaren Bodenbearbeitungs- oder Packerwalzen auf vordefinierte Positionen gebracht werden können.

In bevorzugten Ausführungsformen kann ein Verschwenken der Bodenbearbeitungs- oder Packerwerkzeuge wahlweise manuell, motorisch unterstützt oder automatisch erfolgen, wobei mit einer manuellen oder motorisch unterstützten Verschwenkung in aller Regel eine manuelle Steuerung gemeint ist, nicht jedoch ein manuelles Anheben der verschwenkbaren Seitenteile, da diese normalerweise aufgrund ihrer Gewichte eine motorisch, z.B. hydraulische Verstell- bzw. Hebeeinrichtung benötigen. Weiterhin können die Anschläge in einer Weise ausgestaltet sein, dass sie jeweils verstellbar sind. Die mögliche Verstellung eines Anschlags ist jedoch nicht zwingend, so dass in weiteren Ausführungsformen vorgesehen sein kann, dass der Anschlag nicht verstellbar ist.

Zudem ist die landwirtschaftliche Maschine quer zu ihrer Fahrtrichtung in fünf Maschinenabschnitte oder Maschinensektionen unterteilt, wobei an beiden Längsseiten des Mittelteils jeweils Seitenteile angelenkt sind, die gegenüber dem Mittelteil um horizontale Längsachsen in vertikaler Richtung schwenkbar sind. Hierbei umfassen die Seitenteile jeweils wenigstens zwei gegeneinander verschwenkbare Abschnitte oder Sektionen, so dass auch die Seitenteile nochmals in sich verschwenkbar bzw. klappbar sind, um einen mehrstufigen Faltvorgang zur Reduzierung der Transportbreite und/oder Transporthöhe zu ermöglichen.

Zudem sind die äußeren Sektionen der Seitenteile der Maschine jeweils um 180 Grad nach oben und innen verschwenkbar, wobei die Seitenteile gegenüber dem Mittelteil um ca. 90 Grad in vertikaler Richtung nach oben verschwenkbar sind.

Vorstellbar ist darüber hinaus, dass vorgeordnete und/oder nachgeordnete Bodenbearbeitungs- und/oder Ausbringwerkzeuge in Arbeitsposition jeweils in Arbeitsrichtung nahezu denselben Abstand zur jeweiligen Packereinheit aufweisen.

Zudem ist denkbar, dass jedem der verschwenkbaren Abschnitte jeweils mindestens ein Anschlag zugeordnet ist. Bei einer Transportposition der Maschine kann der jeweils mindestens eine Anschlag eines äußeren verschwenkbaren Abschnittes mit dem jeweils mindestens einen Anschlag eines am gleichen Seitenteil angeordneten inneren verschwenkbaren Abschnittes in Oberflächenkontakt gebracht sein. Diese korrespondierenden mechanischen Anschläge können im zusammengeklappten oder gefalteten Zustand der Seitenteile für definierte Transport- bzw. Faltlagen der Teile zueinander sorgen, ohne dass weitere Sensoren oder Überwachungseinrichtungen erforderlich sind. Die Anschläge sorgen für die jederzeit gewährleistete exakte Positionierung der Teile zueinander, wenn sie verschwenkt und aneinander gelegt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Die Reihenfolge der Abbildungen beschreibt gleichzeitig eine mögliche Reihenfolge des Klappvorganges. Die Packerwalzen können erst eingezogen werden, wenn jeweils die äußere linke und rechte Sektion auf die linke und rechte Sektion darauf geschwenkt wurden. Das Einziehen der Packerwalzen muss in einer Position zwischen dem Beginn der 90° Klappung der linken und rechten Sektion erfolgen und muss spätestens abgeschlossen sein wenn die Packerwalzen kollidieren könnten, in diesem Fall bei ca. 45°.
Fig. 1 zeigt eine Ausführungsvariante einer erfindungsgemäßen landwirtschaftlichen Maschine in ausgeklappter Arbeitsposition, bei der das Fahrwerk ausgehoben ist.
Fig. 2 zeigt die Maschine in ausgeklappter Position, bei der das Fahrwerk für eine Vorbereitung der Klappung durchgeschwenkt ist.
Fig. 3 zeigt die Maschine in einer Stellung entsprechend Fig. 2, jedoch in einer Seitenansicht.
Fig. 4 zeigt den Beginn der Klappung der jeweils äußeren beiden Sektionen.
Fig. 5 zeigt eine Lage, bei der die beiden äußeren Sektionen um 180° verschwenkt sind, wobei die Packer noch ausgehoben, d.h. noch nicht auf Anschlag gefahren sind.
Fig. 6 zeigt eine Seitenansicht der in Fig. 5 gezeigten Klappstellung.
Fig. 7 zeigt eine Detailansicht der Anschläge aus der Fig. 6.
Fig. 8 zeigt eine Lage der Maschine, bei der die äußeren Sektionen um 180 Grad verschwenkt und die Packer auf Anschläge eingezogen sind.
Fig. 9 zeigt eine Seitenansicht der Darstellung gemäß Fig. 8.
Fig. 10 zeigt eine Detailansicht der Anschläge aus Fig. 9.
Fig. 11 zeigt eine Detail-Draufsicht der Anschläge aus Fig. 9.

Die dargestellten Ausführungsformen stellen lediglich Beispiele dar, wie die erfindungsgemäße Vorrichtung ausgestaltet sein kann und stellen keine abschließende Begrenzung dar.

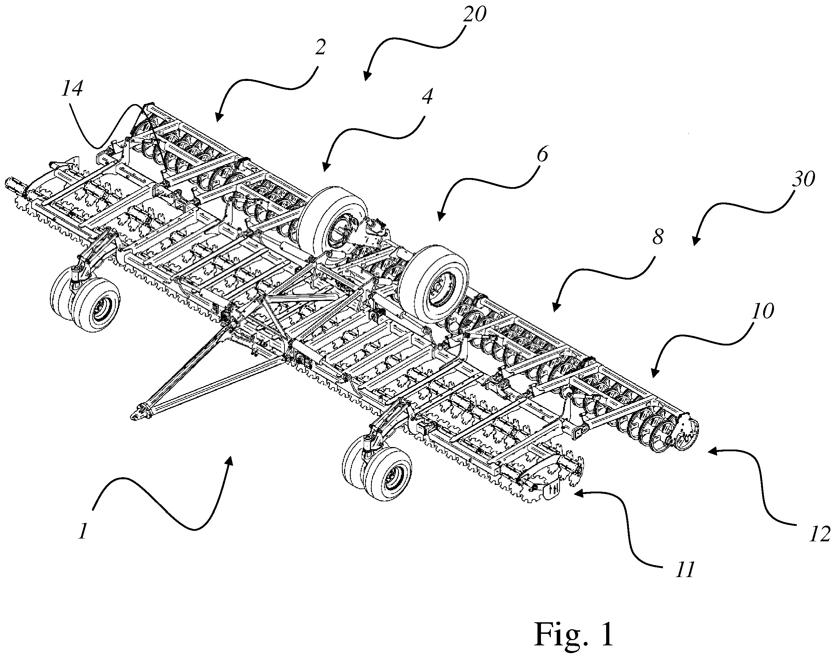

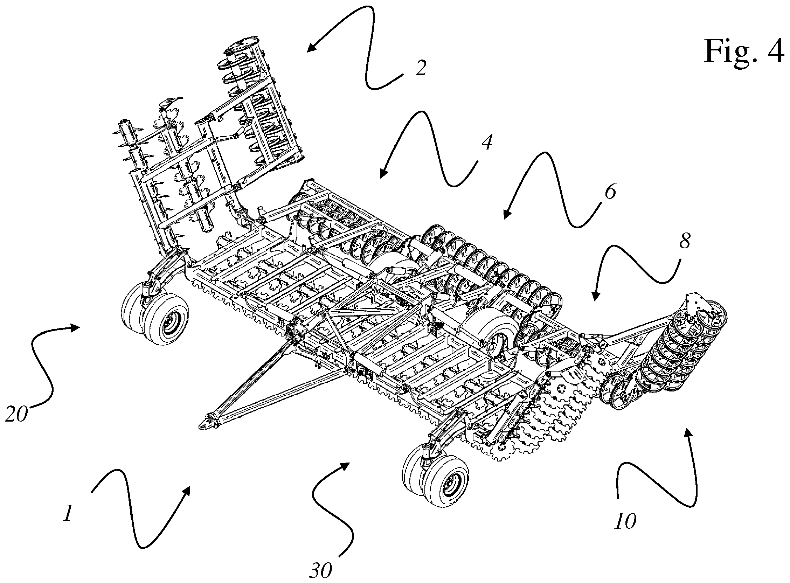

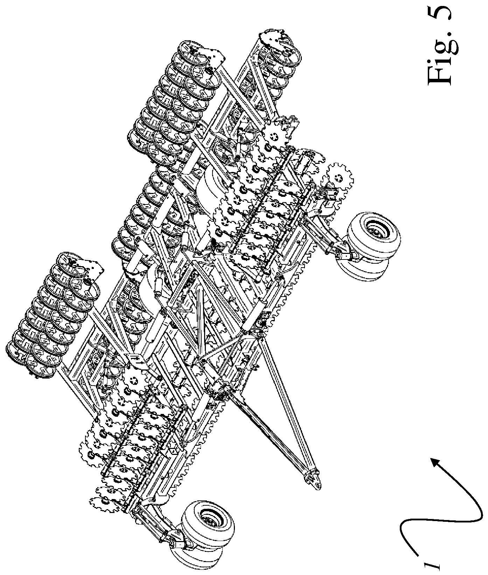

Die in Fig. 1 dargestellte landwirtschaftliche Maschine 1 ist vorgesehen zur Bodenbearbeitung und zum Ausbringen von Saatgut. Zu erkennen sind in Fig. 1 fünf Maschinenabschnitte 2, 4, 6, 8 und 10. An dem Mittelteil 6 sind Seitenteile 20 und 30 angelenkt, die um horizontale Längsachsen verschwenkbar sind. Der Schwenkvorgang ist beispielsweise mit Fig. 4 und nachfolgend in Fig. 5 gut zu erkennen. Das Seitenteil 20 ist gebildet aus den Maschinenabschnitten 2 und 4, das Seitenteil 30 ist gebildet aus den Maschinenabschnitten 8 und 10.

Jedem der Maschinenabschnitte 2, 4, 6, 8 und 10 sind Bodenbearbeitungswerkzeuge 11 und Packerwerkzeuge 12 zugeordnet, die wiederum schwenkbar an den Maschinenabschnitten 2, 4, 6, 8 und 10 angelenkt sind. Wie in Fig. 1 zu erkennen, sind den Maschinenabschnitten 2, 4, 6, 8 und 10 Anschläge 14 zugeordnet, die so angebracht sind, dass diese erst nach dem Verschwenken der Maschinenabschnitte wirksam werden. Hierbei können die Anschläge 14 eines ersten der Maschinenabschnitte 2, 4, 8 und 10 mit Anschlägen 14 eines benachbarten Maschinenabschnittes 2, 4, 8 bzw. 10 in

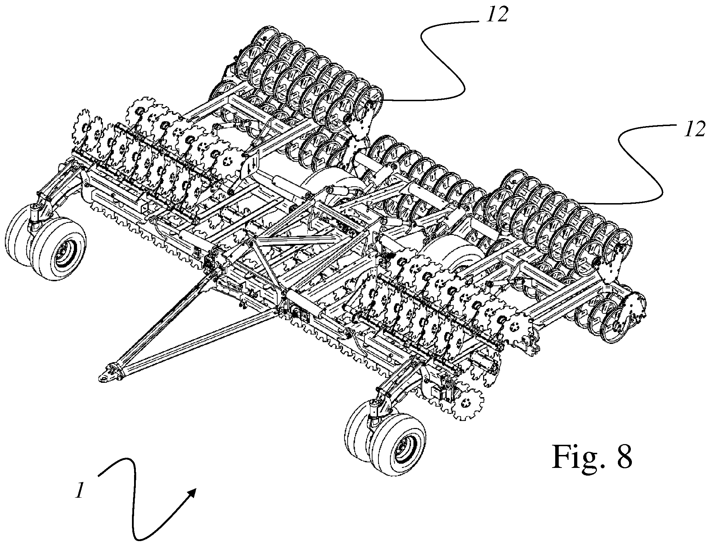

Kontakt treten. Die jeweiligen Maschinenabschnitte 2, 4, 8 und 10 können mittels der Anschläge 14 nach Verschwenken im Wesentlichen unbeweglich miteinander verbunden sein. Weiter werden durch die Anschläge 14 die verschwenkbaren Bodenbearbeitungs- oder Packerwalzen 12 auf vordefinierte Positionen gebracht. Die vordefinierten Positionen sind beispielsweise in Fig. 8 zu erkennen.

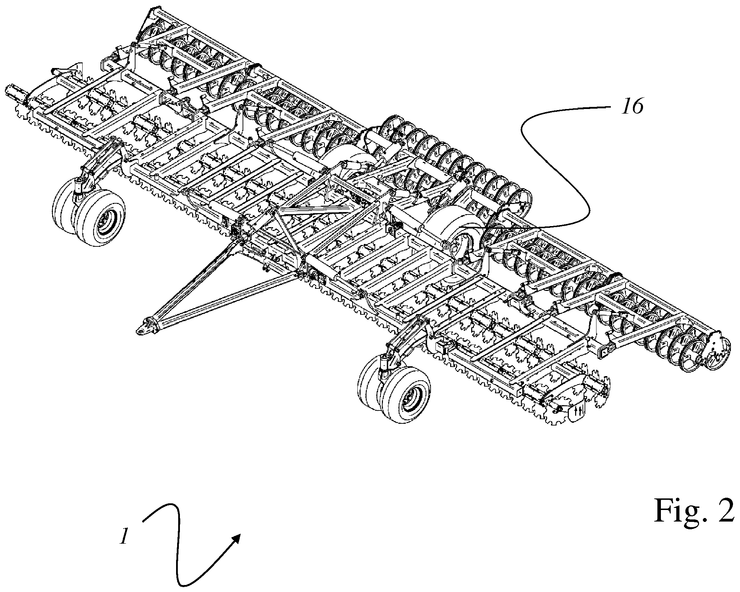

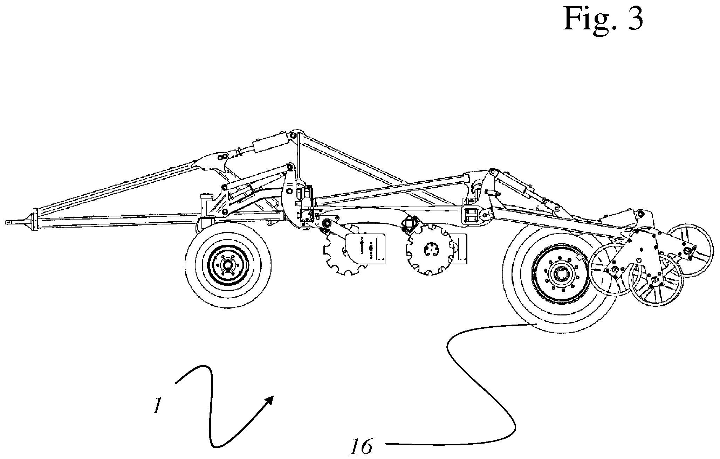

Die Darstellung der Fig. 2 zeigt die Maschine 1 aus Fig. 1 und verdeutlicht die Bewegung eines Fahrwerks 16. Das Fahrwerk 16 wird vor einem Schwenkvorgang, wie er beginnend in Fig. 4 gezeigt ist, mit einer Bodenfläche die Maschine 1 zumindest anteilig tragend in Kontakt gebracht. Die Position des Fahrwerks 16 aus Fig. 2 ist in der Seitenansicht aus Fig. 3 nochmals dargestellt.

In Fig. 4 werden die äußeren Segmente 2 und 10 der Seitenteile 20 und 30 jeweils schwenkbeweglich in Richtung der inneren Segmente 4 und 8 bewegt.

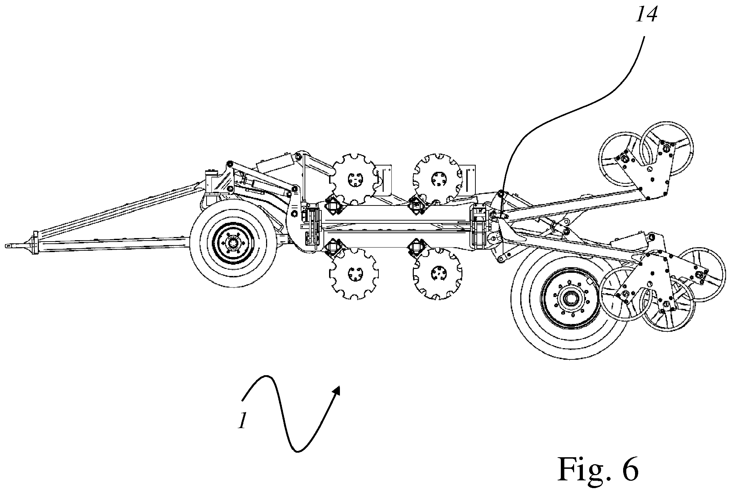

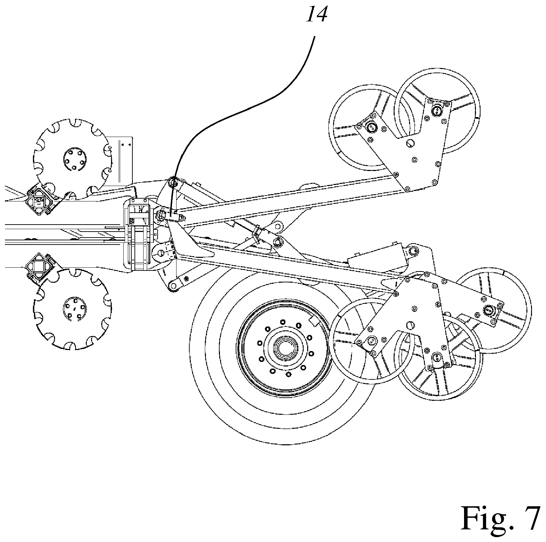

Die Darstellung der Fig. 5 zeigt die Maschine 1 nach erfolgtem Schwenkvorgang der äußeren Segmente 2 und 10, wie in Fig. 4 gezeigt. Die Position aus Fig. 5 der äußeren Segmente 2 und 10 ist weiterhin in der Seitenansicht der Maschine 1 aus Fig. 6 sowie in der Detailansicht eines hinteren Teils der Maschine 1 in Fig. 7 verdeutlicht. Die Figuren 6 und 7 lassen darüber hinaus erkennen, dass die Anschläge 14 noch nicht im Eingriff sind.

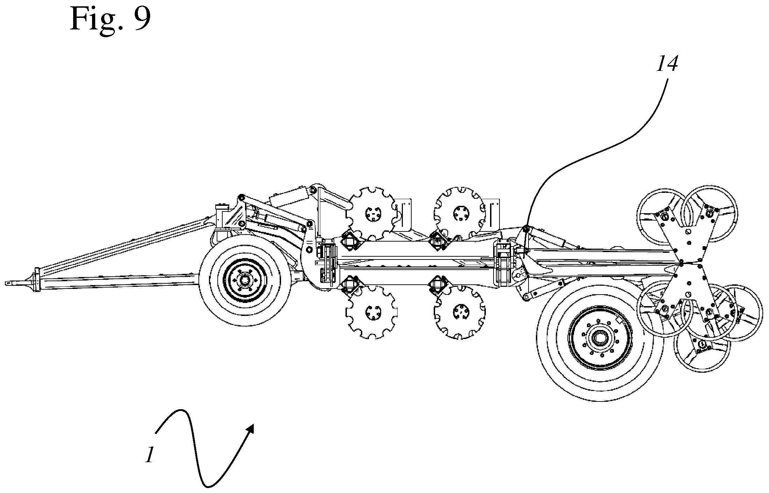

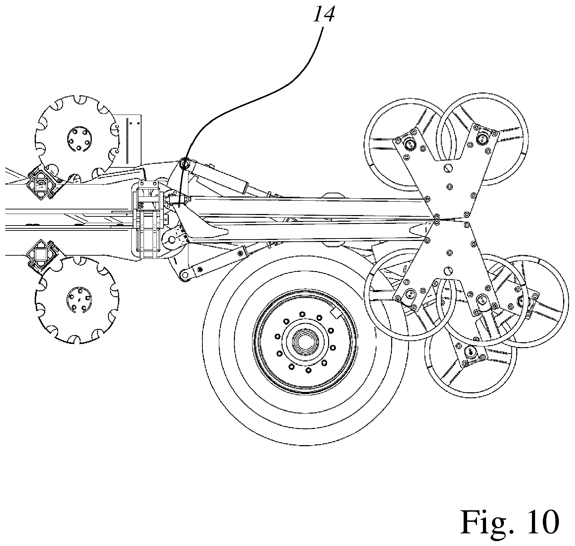

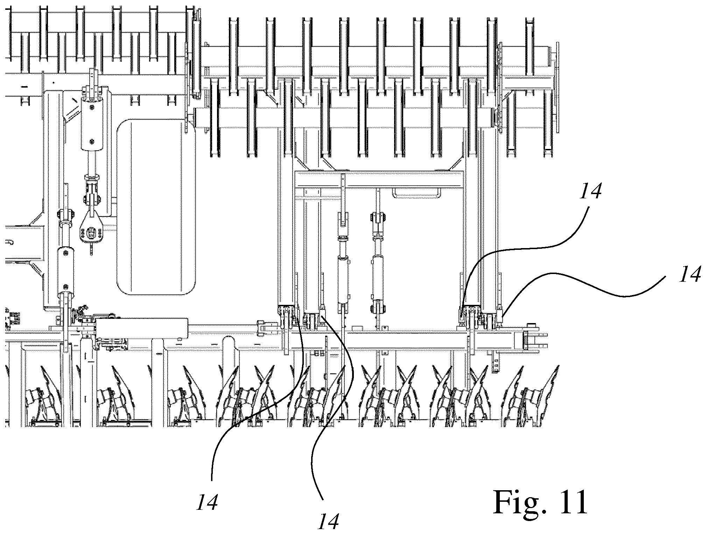

Haben die äußeren Segmente 2 und 10 ihre Positionen wie in den Figuren 5 bis 7 gezeigt eingenommen, so können die Bodenbearbeitungswerkzeuge 12 der äußeren Segmente 2 und 10 in Richtung der inneren Segmente 4 und 8 geschwenkt werden, bis sie in die in den Figuren 8 bis 11 gezeigte Position überführt sind. Der Schwenkweg wird hierbei durch die Anschläge 14 begrenzt, und zwar so, dass die Anschläge 14 sich am Rahmen der durch den Schwenkvorgang gegenüberliegenden Sektion abstützen.

Das bedeutet, dass die Anschläge 14 des Maschinenabschnitts 2 sich am Maschinenabschnitt 4 abstützen und die Anschläge 14 des Maschinenabschnitt 4 sich am Maschinenabschnitt 2 abstützen. Ebenso stützen sich die Anschläge 14, des Maschinenabschnitts 8 am Maschinenabschnitt 10 ab und die Anschläge 14 des Maschinenabschnitts 10 am Maschinenabschnitt 8.

Zur Verdeutlichung sind die wesentlichen Aspekte nachfolgend nochmals in knapper Form dargestellt. Die nachfolgende Darstellung ist nicht einschränkend zu verstehen:
Die Maschine umfasst einen oder mehrere mechanische Anschläge, die nur dann in Eingriff kommen wenn die äußeren linken und rechten Sektionen bereits um 180° auf die linken und rechten Sektionen geschwenkt wurden.

Sobald die äußeren beiden Sektionen um 180° geschwenkt wurden, werden die Packerwalzen eingezogen und stützen sich mit den mechanischen Anschlägen jeweils auf den entgegengesetzten Rahmenelementen der Sektion ab.

Hierdurch erreichen die Verschwenkzylinder der Packerwalzen eine für die Straßenfahrt erforderliche Position, ohne dass ein Wegmesssystem oder elektrisch arbeitende Komponenten oder Sensoren o. dgl. benötigt werden.

Wann die Packer auf deren Anschlag fahren, kann entweder durch manuelle Betätigung oder durch einen automatischen Ablauf erfolgen. Auch könnten die Bewegungsabläufe manuell erfolgen.

## Patentansprüche

1. Landwirtschaftliche Maschine (1) zur Bodenbearbeitung und/oder zum Ausbringen von Saatgut, die quer zu einer Fahrtrichtung in fünf Maschinenabschnitte (2, 4, 6, 8, 10) unterteilt ist, wobei an den Längsseiten eines Mittelteils (6) jeweils Seitenteile (20, 30) angelenkt sind, die gegenüber dem Mittelteil (6) um horizontale Längsachsen verschwenkbar sind, und wobei jedem der Maschinenabschnitte (2, 4, 6, 8, 10) Bodenbearbeitungswerkzeuge (11) und/oder Packerwalzen (12) zugeordnet sind, wobei den Maschinenabschnitten (2, 4, 8 ,10) der Seitenteile (20, 30) mechanische Anschläge (14) zugeordnet sind, die so angebracht sind, dass diese erst nach dem Verschwenken der Maschinenabschnitte (2, 4, 8, 10) der Seitenteile (20, 30) wirksam werden, wobei die äußeren Maschinenabschnitte (2, 10) der Seitenteile (20, 30) der Maschine (1) jeweils um ca. 180 Grad nach oben und innen verschwenkbar sind, **dadurch gekennzeichnet, dass** die Bodenbearbeitungswerkzeuge (11) und/oder Packerwalzen (12) schwenkbar um horizontale Schwenkachsen an den Maschinenabschnitten (2, 4, 6, 8, 10) angelenkt sind, und dass die Bodenbearbeitungswerkzeuge (11) und/oder Packerwalzen (12) der äußeren Maschinenabschnitte (2, 10) der Seitenteile (20,30) in Richtung der inneren Maschinenabschnitte (4, 8) der Seitenteile (20,30) verschwenkbar sind, und dass durch die Anschläge (14) die verschwenkbaren Bodenbearbeitungswerkzeuge (11) und/oder Packerwalzen (12) auf vordefinierte Positionen gebracht werden.

2. Landwirtschaftliche Maschine nach Anspruch 1, bei der jedem der verschwenkbaren Maschinenabschnitte (2, 4, 8, 10) der Seitenteile (20, 30) jeweils mindestens ein Anschlag (14) zugeordnet ist, wobei bei einer Transportposition der Maschine (1) der jeweils mindestens eine Anschlag (14) eines äußeren verschwenkbaren Maschinenabschnittes (2, 10) mit dem jeweils mindestens einen Anschlag (14) eines am gleichen Seitenteil (20, 30) angeordneten inneren verschwenkbaren Maschinenabschnittes (4, 8) in Oberflächenkontakt gebracht ist.

3. Maschine nach Anspruch 1 oder 2, bei der die den Maschinenabschnitten (2, 4, 8, 10) der Seitenteile (20, 30) zugeordneten Anschläge (14) nur dann in Eingriff kommen, wenn der äußere linke Maschinenabschnitt (10) und der äußere rechte Maschinenabschnitt (2) bereits um jeweils 180 Grad auf den inneren linken Maschinenabschnitt (8) bzw. den inneren rechten Maschinenabschnitt (4) verschwenkt wurde.

4. Maschine nach einem der Ansprüche 1 bis 3, bei der die Anschläge (14) jeweils so gestaltet sind, dass die Verschwenkzylinder der Packerwalzen (12) in eine für die Transportfahrt erforderliche Position gebracht werden.

5. Maschine nach einem der vorhergehenden Ansprüche, bei der das Verschwenken der Packerwalzen (12) durch manuelle Betätigung erfolgt.

6. Maschine nach einem der vorhergehenden Ansprüche, bei der das Verschwenken der Packerwalzen (12) durch einen automatischen Ablauf erfolgt.

7. Maschine nach einem der vorhergehen Ansprüche, bei der der Anschlag (14) bzw. die Anschläge (14) so gestaltet ist/sind, dass diese(r) verstellbar ist/sind.

8. Maschine nach einem der Ansprüche 1 bis 6, bei der der Anschlag (14) bzw. die Anschläge (14) so gestaltet ist/sind, dass diese(r) nicht verstellbar ist/sind.

## Claims

1. An agricultural machine (1) for tillage and/or for discharging seed, which is divided transversely to a direction of travel into five machine sections (2, 4, 6, 8, 10), wherein the longitudinal sides of a central part (6) each have side portions (20, 30) articulated, which are pivotable about horizontal longitudinal axes with respect to the middle part (6), and wherein ground cultivating tools (11) and/or packer rollers (12) are associated with each of the machine sections (2, 4, 6, 8 ,10), wherein mechanical stops (14) are associated with the machine sections (2, 4, 8, 10) of the side portions (20, 30) and are mounted in such a manner that they take effect only after the machine sections (2, 4, 8, 10) of the side portions (20, 30) have been pivoted, wherein the outer machine sections (2, 10) of the side portions (20, 30) of the machine (1) are pivotable upwards and inwards by approximately 180 degrees respectively, **characterised in that** the ground cultivating tools (11) and/or packer rollers (12) are pivotably articulated about horizontal pivot axes on the machine sections (2, 4, 6, 8, 10), and that the ground cultivating tools (11) and/or packer rollers (12) of the outer machine sections (2, 10) of the side portions (20, 30) are pivotable in the direction of the inner machine sections (4, 8) of the side portions (20, 30), and that the pivotable ground cultivating tools (11) and/or packer rollers (12) are brought into predefined positions by means of the mechanical stops (14).

2. The agricultural machine as recited in claim 1 comprising at least one mechanical stop (14) associated with each of the pivotable machine sections (2, 4, 8, 10) of the side portions (20, 30) wherein in a transport position of the machine (1), the at least one mechanical stop (14) of each outer pivotable machine section (2, 10) is brought into surface contact with the at least one mechanical stop (14) of each inner pivotable machine section (4, 8) arranged on the same side portion (20, 30).

3. The machine as recited in claim 1 or 2 wherein the mechanical stops (14) associated with the machine sections (2, 4, 8, 10) of the side portions (20, 30) engage only when the outer left machine section (10) and the outer right machine section (2) have already been pivoted by 180 degrees respectively onto the inner left machine section (8) and the inner right machine section (4) respectively.

4. The machine as recited in one of the claims 1 to 3 wherein the mechanical stops (14) are designed in such a manner that the pivot cylinders of the packer rollers (12) are brought into a position required during transport.

5. The machine as recited in one of the preceding claims wherein the packer rollers (12) are pivoted by manual operation.

6. The machine as recited in one of the preceding claims wherein the packer rollers (12) are pivoted by automatic operation.

7. The machine as recited in one of the preceding claims wherein the mechanical stop or stops (14) is/are designed in such a manner that it is/they are adjustable.

8. The machine as recited in one of the claims 1 to 6 wherein the mechanical stop or stops (14) is/are designed in such a manner that it is/they are not adjustable.

## Revendications

1. Machine agricole (1) destiné à la culture du sol et/ou à l'épandage de semences, qui est divisée transversalement à une direction de marche en cinq sections de machine (2, 4, 6, 8, 10), dans laquelle des parties latérales (20, 30) sont articulées respectivement sur les grands côtés d'une partie centrale (6), qui peuvent pivoter autour d'axes longitudinaux horizontaux par rapport à ladite partie centrale (6), et dans laquelle des outils de culture du sol (11) et/ou des rouleaux compacteurs (12) sont associés à chacune des sections de machine (2, 4, 6, 8, 10), dans laquelle des butées (14) mécaniques sont associées aux sections de machine (2, 4, 8,10) des parties latérales (20, 30), qui sont montées de manière à ne devenir efficaces qu'après avoir pivoté les sections de machine (2, 4, 8, 10) des parties latérales (20, 30), dans laquelle les sections de machine (2, 10) extérieures des parties latérales (20, 30) de la machine (1) sont aptes à pivoter chacune vers le haut et vers l'intérieur de 180 degrés à peu près, **caractérisée par le fait que** les outils de culture du sol (11) et/ou rouleaux compacteurs (12) sont articulés sur les sections de machine (2, 4, 6, 8, 10) de manière à pouvoir pivoter autour d'axes de pivotement horizontaux, et que les outils de culture du sol (11) et/ou rouleaux compacteurs (12) des sections de machine extérieures (2, 10) des parties latérales (20, 30) sont aptes à pivoter en direction des sections de machine intérieures (4, 8) des parties latérales (20, 30), et que, grâce aux butées (14), les outils de culture du sol (11) et/ou rouleaux compacteurs (12) aptes à pivoter sont mis dans des positions prédéfinies.

2. Machine agricole selon la revendication 1, dans laquelle au moins une butée (14) est associée respectivement à chacune des sections de machine (2, 4, 8, 10) aptes à pivoter des parties latérales (20, 30), dans lequel, dans le cas d'une position de transport de la machine (1), ladite au moins respectivement une butée (14) d'une section de machine extérieure (2, 10) apte à pivoter est mise en contact de surface avec ladite au moins respectivement une butée (14) d'une section de machine intérieure (4, 8) apte à pivoter qui est disposée sur la même partie latérale (20, 30).

3. Machine selon la revendication 1 ou 2, dans laquelle les butées (14) associées aux sections de machine (2, 4, 8, 10) des parties latérale (20, 30) n'entrent en prise que lorsque la section de machine extérieure gauche (10) et la section de machine extérieure droite (2) ont été pivotées déjà respectivement de 180 degrés sur la section de machine intérieure gauche (8) ou bien la section de machine intérieure droite (4).

4. Machine selon l'une quelconque des revendications 1 à 3, dans laquelle lesdites butées (14) sont configurées chacune de telle sorte que les vérins de pivotement des rouleaux compacteurs (12) sont mis dans une position nécessaire à la marche de transport.

5. Machine selon l'une quelconque des revendications précédentes, dans laquelle le pivotement des rouleaux compacteurs (12) se fait par actionnement manuel.

6. Machine selon l'une quelconque des revendications précédentes, dans laquelle le pivotement des rouleaux compacteurs (12) se fait par un déroulement automatique.

7. Machine selon l'une quelconque des revendications précédentes, dans laquelle la butée (14) ou bien les butées (14) est/sont configurée(s) de telle manière que celle(s)-ci est/sont réglable(s).

8. Machine selon l'une quelconque des revendications 1 à 6, dans laquelle la butée (14) ou bien les butées (14) est/sont configurée(s) de telle manière que celle(s)-ci n'est/ne sont pas réglable(s).
